# EUROPEAN PATENT SPECIFICATION

(11) **EP 3 222 932 B1**
(45) Date of publication and mention of the grant of the patent: **23.09.2020**
(21) Application number: 14906430.5
(22) Date of filing: 19.11.2014
(51) Int. Cl.: F25B 1/00, F24H 1/00, F25B 30/02, F25B 40/00, F25B 49/02

(54) **HEAT PUMP SYSTEM**
WÄRMEPUMPENSYSTEM
SYSTÈME DE POMPE À CHALEUR

(43) Date of publication of application: 27.09.2017
(73) Proprietor: Mitsubishi Electric Corporation, Chiyoda-ku Tokyo 100-8310 (JP)
(72) Inventor: TAKAYAMA, Keisuke, Tokyo 100-8310 (JP)
(74) Representative: Mewburn Ellis LLP
(86) International application number: PCT/JP2014/080666
(87) International publication number: WO 2016/079829

(56) References cited:
- EP-A1- 2 489 774
- EP-A1- 2 615 391
- WO-A1-2009/157320
- WO-A1-2012/157764
- JP-A- 2005 164 103
- JP-A- 2010 091 135

## Description

### [Technical Field]

The present invention relates to a heat pump system.

### [Background Art]

PTL 1 described below discloses a heat cycle system which uses a working medium including 1,1,2-trifluoroethylene (HFO-1123). As a measure to prevent proliferation of legionella bacteria, a heat pump water heater needs to be operated such that discharged hot water temperature is equal to or higher than 65C. HFO-1123 has a critical temperature of 59.2C. Therefore, when HFO-1123 is used in a refrigerant of a heat pump water heater, a section, where a state of the refrigerant becomes a critical point of HFO-1123, or a vicinity thereof may be created inside a heater which performs heat exchange between water and the refrigerant. EP 2 615 391 A1 proposes an air conditioning device that is configured to transfer energy to a heat medium other than a refrigerant and to introduce the heat medium to another refrigeration cycle. EP 2 489 774 A1 proposes a laundry dryer with heat pump system, comprising a closed refrigerant circuit and a drying air circuit.

The device in EP 2 615 391 A1 comprises: a refrigerant which is HFO-1234yf; a compressor configured to compress the refrigerant; a pump configured to pump a heating medium; a heater coupled to the compressor to exchange heat between the heating medium pumped by the pump and the refrigerant compressed by the compressor; a decompressor configured to decompress the refrigerant, the decompressor having an inlet and an outlet; an evaporator coupled to the decompressor to evaporate the refrigerant decompressed by the decompressor; and a controller coupled to the compressor, the decompressor and the pump, the controller being configured to sequentially perform a first operation, a second operation and a third operation after the compressor is activated, a pressure of the refrigerant between the compressor and the inlet of the decompressor rising from a lower level than a critical pressure of the substance to a higher level than the critical pressure in the first operation, the pressure of the refrigerant between the compressor and the inlet of the decompressor being kept at a level higher than the critical pressure in the second operation, a temperature of the heating medium flowing out from the heater being kept at a level higher than a critical temperature of the substance in the third operation.

### [Citation List]

### [Patent Literature]

[PTL 1] WO 2012/157764

### [Summary of Invention]

### [Technical Problem]

At a critical point and a vicinity thereof of a substance having a carbon-to-carbon double bond such as HFO-1123, a reaction that cleaves the double bond is promoted. As a result, HFO-1123 is decomposed and may lose its ability to function as a refrigerant. In addition, sludge may be created inside a refrigerant circuit by decomposition products and may cause clogging of an expansion valve or the like.

The present invention has been made in order to solve problems such as that described above and an object thereof is to provide a heat pump system capable of preventing decomposition of a substance, which is contained in a refrigerant and which has a carbon-to-carbon double bond, and increasing a heating temperature of a heating medium.

### [Solution to Problem]

A heat pump system to claim 1 is provided according to the present invention.

### [Advantageous Effects of Invention]

With the heat pump system according to the present invention, decomposition of a substance which is included in a refrigerant and which has a carbon-to-carbon double bond can be prevented and a heating temperature of a heating medium can be increased.

### [Brief Description of Drawings]

Fig. 1 is a configuration diagram of a heat pump unit included in a heat pump system according to a first embodiment of the present invention.
Fig. 2 is a configuration diagram of a hot water-storing water heater system including the heat pump unit shown in Fig. 1 and a tank unit.
Fig. 3 is a flow chart showing a control operation performed by a controller when an operation of a compressor is activated.
Fig. 4 is a diagram showing an operation of the heat pump unit during a first operation.
Fig. 5 is a P-h line diagram or, in other words, a Mollier diagram of a refrigerant circuit of the heat pump unit during the first operation.
Fig. 6 is a diagram showing an operation of the heat pump unit during a second operation and a third operation.
Fig. 7 is a P-h line diagram or, in other words, a Mollier diagram of the refrigerant circuit of the heat pump unit during the second operation and the third operation.
Fig. 8 is a configuration diagram showing a modification of the heat pump unit according to the first embodiment of the present invention.
Fig. 9 is a graph showing changes in temperature and specific enthalpy of the refrigerant and water when compressor discharge pressure is supercritical.
Fig. 10 is a graph showing changes in temperature and specific enthalpy of the refrigerant and water when compressor discharge pressure is critical pressure or lower.

### [Description of Embodiments]

Hereinafter, embodiments of the present invention will be described with reference to the drawings. Note that common elements in the respective drawings are denoted by same reference signs and overlapping descriptions will be omitted.

### First embodiment

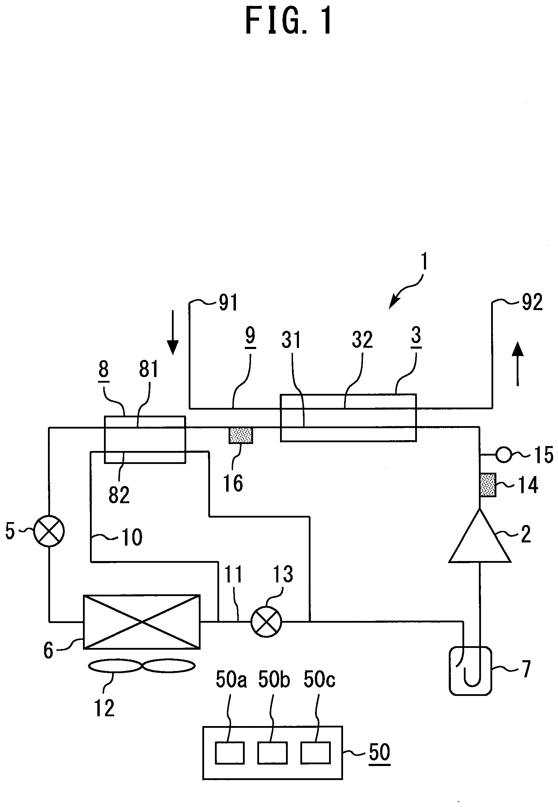

Fig. 1 is a configuration diagram of a heat pump unit 1 included in a heat pump system according to a first embodiment of the present invention. As shown in Fig. 1, the heat pump unit 1 according to the first embodiment includes a refrigerant circuit. The refrigerant circuit includes a compressor 2, a heater 3, a decompressor 5, an evaporator 6, an accumulator 7, a high/low pressure heat exchanger 8, and refrigerant piping 10 which connects these elements. The refrigerant circuit of the heat pump unit 1 further includes a bypass passage 11 which bypasses a low pressure section 82 of the high/low pressure heat exchanger 8 and a bypass valve 13 which opens and closes the bypass passage 11. The heat pump unit 1 includes a refrigerant sealed in the refrigerant circuit. As an alternative to the illustrated configuration, the bypass passage 11 may be provided so as to bypass a high pressure section 81 of the high/low pressure heat exchanger 8.

The heat pump unit 1 further includes a heating medium pipe 9, an air blower 12 which blows air into the evaporator 6, a first refrigerant temperature sensor 14, a refrigerant pressure sensor 15, a second refrigerant temperature sensor 16, and a controller 50. A heating medium which is a fluid heated by the heat pump unit 1 flows through the heating medium pipe 9. The heating medium pipe 9 has an inlet 91 and an outlet 92. In the first embodiment, the heating medium is water. The heating medium according to the present invention may be a liquid other than water such as antifreeze or brine. The heat pump unit 1 according to the first embodiment is used as a water heater. The heat pump system according to the present invention is also applicable to a heat pump system for heating a heating medium used for purposes (such as indoor-heating) other than water heating.

The compressor 2 compresses low pressure refrigerant gas having been taken in and discharges high pressure refrigerant gas. The heater 3 is a heat exchanger which performs heat exchange between the heating medium and the high pressure refrigerant compressed by the compressor 2. The heater 3 has a refrigerant flow path 31 and a heating medium flow path 32. The heating medium pipe 9 guides the heating medium having flowed in from the inlet 91 to an inlet of the heating medium flow path 32 of the heater 3, and guides the heating medium having exited the heating medium flow path 32 from an outlet thereof to the outlet 92. In the heater 3, the heating medium and the refrigerant form counterflows to each other.

The high/low pressure heat exchanger 8 has the high pressure section 81 and the low pressure section 82. A high pressure refrigerant having passed through the refrigerant flow path 31 of the heater 3 flows into the high pressure section 81 of the high/low pressure heat exchanger 8. An opening of the decompressor 5 is variable. For example, an expansion valve can be used as the decompressor 5. An inlet of the decompressor 5 is connected to an outlet of the high pressure section 81 of the high/low pressure heat exchanger 8. An outlet of the decompressor 5 is connected to an inlet of the evaporator 6. A high pressure refrigerant having passed through the high pressure section 81 of the high/low pressure heat exchanger 8 is expanded and decompressed when passing through the decompressor 5 and becomes a low pressure refrigerant. The low pressure refrigerant flows into the evaporator 6. When the bypass valve 13 is closed, the low pressure refrigerant having passed through the evaporator 6 flows into the low pressure section 82 of the high/low pressure heat exchanger 8.

The evaporator 6 is a heat exchanger which performs heat exchange between the refrigerant and air. The evaporator 6 causes the refrigerant to absorb heat of outside air blown by the air blower 12. In the present invention, a fluid which exchanges heat with the refrigerant in the evaporator 6 is not limited to air and may instead be groundwater, solar-heated water, drainage water, or the like. In the first embodiment, the air blower 12 corresponds to a flow rate regulating section which regulates a flow rate of the fluid which exchanges heat with the refrigerant in the evaporator 6.

The high/low pressure heat exchanger 8 performs heat exchange between the high pressure refrigerant after exchanging heat with the heating medium and the low pressure refrigerant having passed through the evaporator 6. The low pressure refrigerant having passed through the low pressure section 82 of the high/low pressure heat exchanger 8 flows into the accumulator 7. When the bypass valve 13 is open, the low pressure refrigerant from the evaporator 6 passes through the bypass passage 11 and flows into the accumulator 7. In the refrigerant having flowed into the accumulator 7, a refrigerant liquid is stored in the accumulator 7 and a refrigerant gas is discharged from the accumulator 7 to be sucked into the compressor 2. In this manner, the accumulator 7 stores excess refrigerant liquid in the refrigerant circuit.

In the refrigerant circuit described above, a section between the outlet of the compressor 2 and the inlet of the decompressor 5 will be referred to as a "high pressure side" and a section between the outlet of the decompressor 5 and the inlet of the compressor 2 will be referred to as a "low pressure side". In addition, pressure of the refrigerant on the high pressure side will be referred to as "high pressure-side pressure" and pressure of the refrigerant on the low pressure side will be referred to as "low pressure-side pressure".

The first refrigerant temperature sensor 14 detects a temperature of the refrigerant discharged from the compressor 2. The temperature of the refrigerant discharged from the compressor 2 or, in other words, the temperature of the refrigerant after being compressed by the compressor 2 will be hereinafter referred to as a "compressor discharge temperature". The refrigerant pressure sensor 15 detects pressure of the refrigerant discharged from the compressor 2. The pressure of the refrigerant discharged from the compressor 2 or, in other words, the pressure of the refrigerant after being compressed by the compressor 2 will be hereinafter referred to as a "compressor discharge pressure". The second refrigerant temperature sensor 16 detects a temperature of a high pressure refrigerant at an outlet of the refrigerant flow path 31 of the heater 3. The high pressure-side pressure can be considered approximately equal to the compressor discharge pressure.

The controller 50 includes a CPU (central processing unit) 50a, a storage section 50b, and an input/output interface 50c. The storage section 50b includes a ROM (read only memory), a RAM (random access memory), a nonvolatile memory, and the like. The storage section 50b stores a control program, data, and the like. The input/output interface 50c is used to input and output external signals to and from the CPU 50a. The various actuators and sensors included in the heat pump unit 1 are electrically connected to the controller 50. The controller 50 controls operations of the heat pump unit 1 by having the CPU 50a execute the control program stored in the storage section 50b.

The controller 50 is capable of controlling the opening of the decompressor 5. The controller 50 is capable of controlling a capacity of the compressor 2. The capacity of the compressor 2 corresponds to an amount of the refrigerant which is pumped out by the compressor 2 per unit time. The controller 50 can control the capacity of the compressor 2 by changing a rotating speed of the compressor 2 using, for example, inverter control. The controller 50 can control a flow rate of the heating medium (water) of the heating medium flow path 32 of the heater 3 by controlling an operation of a water pump 22 to be described later. The controller 50 can control the flow rate of water in the heating medium flow path 32 of the heater 3 by changing a rotating speed of the water pump 22 using, for example, inverter control.

A temperature of the heating medium (water) flowing out from the heating medium flow path 32 of the heater 3 will be hereinafter referred to as a "heating medium heating temperature". When the water flow rate through the heater 3 increases, the heating medium heating temperature drops. When the water flow rate through the heater 3 decreases, the heating medium heating temperature rises. By adjusting the water flow rate through the heater 3, the controller 50 can control the heating medium heating temperature so as to match a target temperature. The target temperature of the heating medium heating temperature during a steady-state operation (a third operation to be described later) of the heat pump unit 1 is desirably 65°C or higher. Accordingly, since the temperature of hot water stored in the hot water storage tank 21 to be described later can be set to 65°C or higher, proliferation of legionella bacteria can be reliably prevented.

The refrigerant of the heat pump unit 1 contains a substance having a carbon-to-carbon double bond. Hereinafter, this substance will be referred to as a "first substance". A critical temperature of the first substance is a temperature lower than the heating medium heating temperature during a steady-state operation (the third operation) of the heat pump unit 1. In the first embodiment, 1,1,2-trifluoroethylene is used as the first substance. In the following description, 1,1,2-trifluoroethylene will be referred to as HFO-1123. HFO-1123 has a critical temperature of 59.2°C. The heat pump system according to the first embodiment contributes toward suppression of global warming by using the first substance which has a carbon-to-carbon double bond and a low global warming potential (GWP) in a refrigerant.

The refrigerant of the heat pump unit 1 may be a mixed refrigerant further containing a substance other than the first substance or a single refrigerant solely constituted by the first substance. When the heat pump unit 1 uses a mixed refrigerant, a proportion of concentration of the first substance is favorably 60 mass% or higher. The refrigerant of the heat pump unit 1 may be a mixed refrigerant containing the first substance and a second substance. A critical temperature of the second substance is desirably higher than the heating medium heating temperature during a steady-state operation (the third operation) of the heat pump unit 1. A boiling point of the second substance is desirably higher than a boiling point of the first substance. For example, 2,3,3,3-tetrafluoropropene (HFO-1234yf) is preferably used as the second substance. HFO-1234yf has a critical temperature of 95°C. HFO-1234yf has a carbon-to-carbon double bond. By using a substance having a carbon-to-carbon double bond as the second substance, the impact on global warming can be further prevented when using a mixed refrigerant containing the second substance.

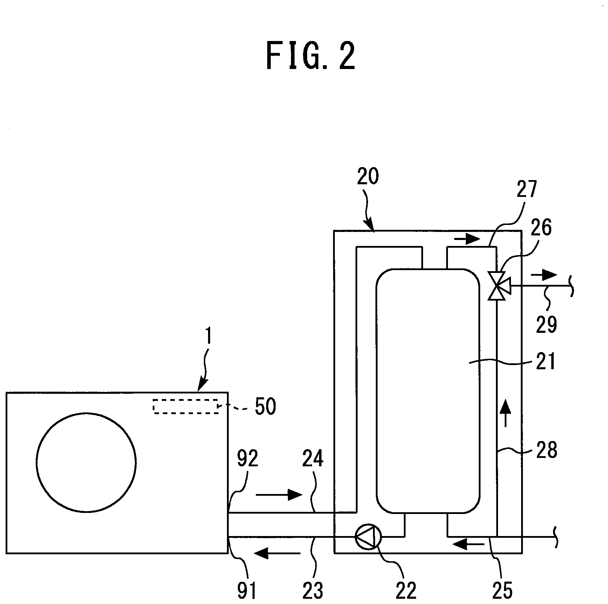

Fig. 2 is a configuration diagram of a hot water-storing water heater system including the heat pump unit 1 shown in Fig. 1 and a tank unit 20. As shown in Fig. 2, the tank unit 20 incorporates a hot water storage tank 21 and the water pump 22. The heat pump unit 1 and the tank unit 20 are connected to each other via water channels 23 and 24. In addition, the heat pump unit 1 and the hot water storage tank 21 are connected to each other via electrical wiring (not shown). One end of the water channel 23 is connected to the inlet 91 of the heating medium pipe 9 of the heat pump unit 1. Another end of the water channel 23 is connected to a lower part of the hot water storage tank 21 in the tank unit 20. The water pump 22 is installed midway along the water channel 23 in the tank unit 20. One end of the water channel 24 is connected to the outlet 92 of the heating medium pipe 9 of the heat pump unit 1. Another end of the water channel 24 is connected to an upper part of the hot water storage tank 21 in the tank unit 20. In the present invention, as an alternative to the illustrated configuration, the water pump 22 may be built into the heat pump unit 1. In the present invention, as an alternative to the illustrated configuration, the heat pump unit 1 and the tank unit 20 may be integrated.

A water supply pipe 25 is further connected to the lower part of the hot water storage tank 21 of the tank unit 20. Water supplied from an external water source such as waterworks passes through the water supply pipe 25 and flows into and stored in the hot water storage tank 21. The inside of the hot water storage tank 21 is constantly kept in a fully-filled state due to inflow of water from the water supply pipe 25. A mixing valve 26 is further provided in the tank unit 20. The mixing valve 26 is connected to the upper part of the hot water storage tank 21 via a hot water outflow pipe 27. In addition, a water supply branch pipe 28 which is branched from the water supply pipe 25 is connected to the mixing valve 26. One end of a hot water supply pipe 29 is further connected to the mixing valve 26. Although not illustrated, another end of the hot water supply pipe 29 is connected to a hot water supply terminal such as a tap, a shower, or a bathtub.

When performing a heat accumulating operation for increasing an amount of heat stored in the hot water storage tank 21, the controller 50 operates the compressor 2 and the water pump 22. During the heat accumulating operation, water stored in the hot water storage tank 21 is sent to the heat pump unit 1 through the water channel 23 by the water pump 22, heated by the heater 3 of the heat pump unit 1, and becomes high temperature hot water. The high temperature hot water passes through the water channel 24 and returns to the tank unit 20, and flows into the hot water storage tank 21 from above. As a result of the heat accumulating operation described above, hot water is stored in the hot water storage tank 21 so as to form a temperature stratification where an upper side has a high temperature and a lower side has a lower temperature. During the heat accumulating operation, the controller 50 can control the heating medium heating temperature so as to match a target temperature by adjusting the water flow rate through the heater 3.

A plurality of temperature sensors are attached at intervals in a vertical direction on a surface of the hot water storage tank 21. By detecting a temperature distribution inside the hot water storage tank 21 in the vertical direction with the temperature sensors, the controller 50 can calculate an amount of stored hot water, an amount of stored heat, an amount of remaining hot water, and the like in the hot water storage tank 21. The controller 50 controls start and stop timings of heat accumulating operations and the like based on the amount of stored hot water, the amount of stored heat, or the amount of remaining hot water in the hot water storage tank 21.

When supplying hot water from the hot water supply pipe 29 to the hot water supply terminal, the high temperature hot water in the hot water storage tank 21 is supplied to the mixing valve 26 through the hot water outflow pipe 27 and, at the same time, low temperature water is supplied to the mixing valve 26 through the water supply branch pipe 28. The high temperature hot water and the low temperature water are mixed at the mixing valve 26 and supplied to the hot water supply terminal through the hot water supply pipe 29. The controller 50 can control a hot water supply temperature to the hot water supply pipe 29 by adjusting a mixing ratio of the high temperature hot water and the low temperature water with the mixing valve 26.

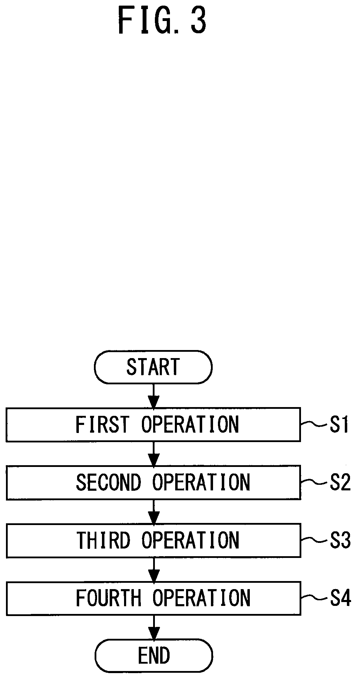

Fig. 3 is a flow chart showing a control operation performed by the controller 50 when an operation of the compressor 2 is activated. As shown in Fig. 3, when an operation of the compressor 2 is activated, the controller 50 first performs a first operation (step S1). After the first operation ends, the controller 50 performs a second operation (step S2). After the second operation ends, the controller 50 performs a third operation (step S3). The third operation corresponds to a steady-state operation. When stopping the operation of the refrigerant circuit during the third operation, the controller 50 performs a fourth operation (step S4) before stopping the compressor 2.

### (First operation)

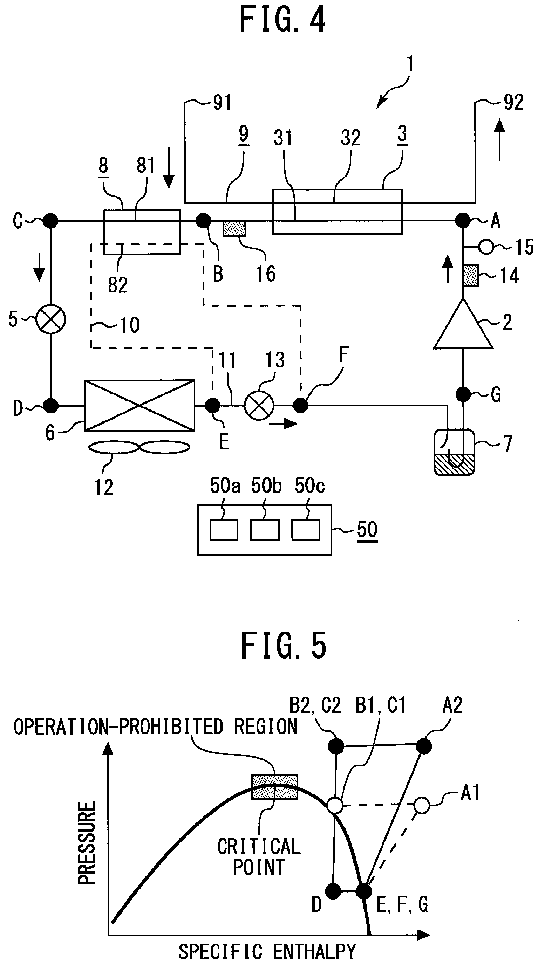

Fig. 4 is a diagram showing an operation of the heat pump unit 1 during the first operation. During the first operation, the controller 50 performs control as follows.
(1) The bypass valve 13 is fully opened. Accordingly, the refrigerant passes through the bypass passage 11 and bypasses the low pressure section 82 of the high/low pressure heat exchanger 8.
(2) The water flow rate through the heater 3 is set lower than the water flow rate through the heater 3 during the third operation. Favorably, the water pump 22 is placed in a stopped state or driven at minimum rotating speed. Favorably, the water flow rate through the heater 3 is set to zero or to a minimum flow rate.
(3) The opening of the decompressor 5 is set larger than the opening of the decompressor 5 during the second operation and the third operation.
(4) The compressor discharge temperature is set lower than the compressor discharge temperature during the second operation and the third operation.
(5) The capacity of the compressor 2 is set lower than the capacity of the compressor 2 during the second operation and the third operation.

A flow channel passing through the low pressure section 82 of the high/low pressure heat exchanger 8 is longer than the bypass passage 11, and as a result a fluid passing through the former receives larger resistance than that through the latter. Therefore, when the bypass valve 13 is fully open, most of the refrigerant having exited the evaporator 6 passes through the bypass passage 11 without passing through the low pressure section 82 of the high/low pressure heat exchanger 8. In the following description, for convenience's sake, the entire refrigerant having exited the evaporator 6 is assumed to pass through the bypass passage 11 during the first operation.

Fig. 5 is a P-h line diagram or, in other words, a Mollier diagram of the refrigerant circuit of the heat pump unit 1 during the first operation. A curve shown in Fig. 5 represents a saturated vapor line and a saturated liquid line of the first substance. When the state of the refrigerant is at a critical point of the first substance and in a vicinity thereof, the first substance becomes more chemically reactive, a double bond of the first substance is more readily cleaved, and the first substance is more readily decomposed. In order to prevent decomposition of the first substance, as shown in Fig. 5, the critical point of the first substance and a vicinity thereof is designated as an operation-prohibited region. The heat pump system according to the first embodiment is capable of preventing decomposition of the first substance by operating such that the state of the refrigerant does not pass the operation-prohibited region to the greatest extent feasible.

A to G in Fig. 5 correspond to pressure and specific enthalpy of the refrigerant at positions A to G in Fig. 4. A1, B1, and C1 represent states immediately after activation of the compressor 2. A2, B2, and C2 represent states upon end of the first operation. Hereinafter, changes in pressure and specific enthalpy of the refrigerant during the first operation will be described with reference to Fig. 5.

As the refrigerant is compressed by the compressor 2, the state of the refrigerant changes from point G to point A. As the refrigerant is cooled by the heater 3, the state of the refrigerant changes from point A to point B. Since the water flow rate through the heater 3 is at zero or at a low level, a difference in specific enthalpy between point A and point B is smaller than that during the third operation. Since the refrigerant having exited the evaporator 6 does not pass through the low pressure section 82 of the high/low pressure heat exchanger 8, heat exchange does not take place in the high/low pressure heat exchanger 8. Therefore, the state of the refrigerant (point C) having passed through the high pressure section 81 of the high/low pressure heat exchanger 8 is substantially the same as that at point B. By passing through the decompressor 5 and expanding, the state of the refrigerant changes from point C to point D. Therefore, the state (point D) of the refrigerant having passed through the decompressor 5 is a gas-liquid two-phase state. As the refrigerant is heated by outside air in the evaporator 6, the state of the refrigerant changes from point D to point E. The state (point E) of the refrigerant at the outlet of the evaporator 6 is a gas-liquid two-phase state or a saturated gas state. The refrigerant having exited the evaporator 6 passes through the bypass passage 11 and directly flows into the accumulator 7 without passing through the low pressure section 82 of the high/low pressure heat exchanger 8. Therefore, the states of the refrigerant at point E and point F are substantially the same as that at point G. In the accumulator 7, gas and liquid of the refrigerant are separated from each other and mainly refrigerant gas is sucked into the compressor 2 (point G).

During the first operation, since the opening of the decompressor 5 is larger than the opening of the decompressor 5 during the third operation, the refrigerant at the outlet of the evaporator 6 is likely to assume a gas-liquid two-phase state. Therefore, the refrigerant liquid readily accumulates in the accumulator 7. A density of the refrigerant at the inlet of the decompressor 5 during the first operation is lower than the density of the refrigerant at the inlet of the decompressor 5 during the third operation. By expanding the opening of the decompressor 5, the refrigerant can flow more readily when the density of the refrigerant is low.

During the first operation, in accordance with an amount of the refrigerant stored in the accumulator 7 (a height of a liquid surface inside the accumulator 7), the state of the refrigerant sucked into the compressor 2 assumes a state of slightly wet vapor instead of a saturated gas state. Therefore, when the amount of the refrigerant liquid accumulated in the accumulator 7 increases, the compressor discharge temperature drops. During the first operation, the controller 50 desirably controls the opening of the decompressor 5 so that the compressor discharge temperature as detected by the first refrigerant temperature sensor 14 is slightly lower than the compressor discharge temperature during the third operation. Accordingly, the refrigerant liquid can be prevented from overflowing from the accumulator 7 and the height of the liquid surface of the accumulator 7 can be properly controlled.

During the first operation, since the water flow rate through the heater 3 is set to zero or to a low level, a cooling amount of the refrigerant by the heater 3 is smaller than that during the third operation. Therefore, the specific enthalpy of the refrigerant at the inlet of the decompressor 5 is higher than the specific enthalpy at the critical point of the first substance. By maintaining the specific enthalpy of the refrigerant at the inlet of the decompressor 5 at a higher level than the specific enthalpy at the critical point of the first substance during the first operation, the refrigerant can be reliably prevented from passing through the operation-prohibited region which is the critical point of the first substance and a vicinity thereof. As a result, decomposition of the first substance can be prevented. During the first operation, by increasing the amount of the refrigerant stored in the accumulator 7 as compared to that during the third operation, operation is enabled on a side (gas side) where specific enthalpy is higher than the critical point of the first substance.

During the first operation, the controller 50 desirably controls the air blower 12 so that a flow rate of air which passes through the evaporator 6 is lower than a flow rate of air which passes through the evaporator 6 during the third operation. Accordingly, the refrigerant at the outlet of the evaporator 6 more readily assumes a gas-liquid two-phase state and refrigerant liquid more readily accumulates in the accumulator 7.

The controller 50 is capable of calculating specific enthalpy of the refrigerant at the outlet of the refrigerant flow path 31 of the heater 3 based on the temperature of the refrigerant at the outlet of the refrigerant flow path 31 of the heater 3 as detected by the second refrigerant temperature sensor 16 and on compressor discharge pressure (high pressure-side pressure) as detected by the refrigerant pressure sensor 15. During the first operation, the controller 50 may control the operation of the water pump 22 and adjust the water flow rate through the heater 3 so that a calculation value of the specific enthalpy of the refrigerant at the outlet of the refrigerant flow path 31 of the heater 3 is higher than the specific enthalpy at the critical point of the first substance. Accordingly, the specific enthalpy of the refrigerant at the inlet of the decompressor 5 can be reliably maintained at a higher level than the specific enthalpy at the critical point of the first substance.

The high pressure-side pressure (points A1, B1, and C1) at the start of the first operation is at a lower level than the critical pressure of the first substance. The high pressure-side pressure (points A2, B2, and C2) at the end of the first operation is at a higher level than the critical pressure of the first substance. During the first operation, the high pressure-side pressure rises from a lower level (points A1, B1 and C1) than the critical pressure of the first substance to a higher level (points A2, B2 and C2) than the critical pressure of the first substance. When the compressor discharge pressure detected by the refrigerant pressure sensor 15 becomes sufficiently higher than the critical pressure of the first substance, the controller 50 ends the first operation and makes a transition to the second operation.

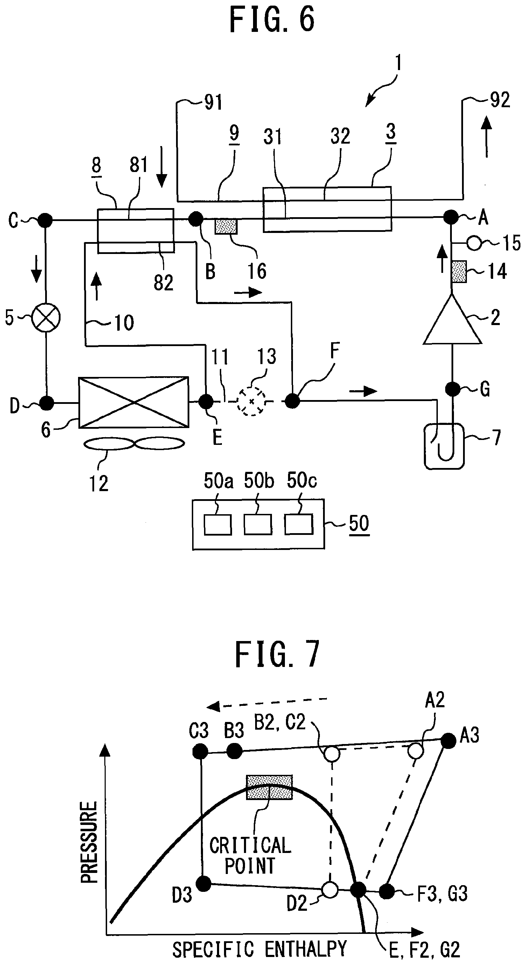

Fig. 6 is a diagram showing an operation of the heat pump unit 1 during the second operation and the third operation. Fig. 7 is a P-h line diagram or, in other words, a Mollier diagram of the refrigerant circuit of the heat pump unit 1 during the second operation and the third operation. A curve shown in Fig. 7 represents a saturated vapor line and a saturated liquid line of the first substance. A to G in Fig. 7 correspond to pressure and specific enthalpy of the refrigerant at positions A to G in Fig. 6. A2, B2, C2, D2, F2, and G2 represent states at the start of the second operation. A3, B3, C3, D3, F3, and G3 represent states at the end of the second operation and during the third operation.

### (Second operation)

During the second operation, the controller 50 performs control as follows.
(1) The bypass valve 13 is fully closed. Accordingly, the refrigerant passes through the low pressure section 82 of the high/low pressure heat exchanger 8 without passing through the bypass passage 11.
(2) By gradually increasing the rotating speed of the water pump 22, the water flow rate through the heater 3 is increased in a continuous or stepwise manner. By gradually increasing the water flow rate through the heater 3, the high pressure-side pressure can be maintained at a higher level than the critical pressure of the first substance.
(3) The opening of the decompressor 5 is set smaller than the opening of the decompressor 5 during the first operation.
(4) The compressor discharge temperature is set higher than the compressor discharge temperature during the first operation.
(5) The capacity of the compressor 2 is set higher than the capacity of the compressor 2 during the first operation.

During the second operation, the refrigerant accumulated in the accumulator 7 moves to the high pressure side. During the second operation, by setting the opening of the decompressor 5 smaller than the opening during the first operation, the refrigerant at the outlet of the evaporator 6 assumes a state of superheated steam. During the second operation, by setting the capacity of the compressor 2 higher than that during the first operation, movement of the refrigerant accumulated in the accumulator 7 to the high pressure side is promoted. During the second operation, an excessive rise of high pressure can be prevented by performing a heat exchange between the refrigerant flowing through the high pressure section 81 and the refrigerant flowing through the low pressure section 82 in the high/low pressure heat exchanger 8. During the second operation, the refrigerant from the outlet of the refrigerant flow path 31 of the heater 3 is cooled by the high/low pressure heat exchanger 8.

From the start to the end of the second operation, the state of the refrigerant circuit changes as follows.
(1) The state of the refrigerant sucked into the compressor 2 changes from point G2 to point G3. Due to the refrigerant being heated by the high/low pressure heat exchanger 8 before being sucked into the compressor 2, the specific enthalpy of the refrigerant sucked into the compressor 2 rises.
(2) The state of the refrigerant discharged from the compressor 2 changes from point A2 to point A3. Due to the rise of the specific enthalpy of the refrigerant sucked into the compressor 2, the specific enthalpy of the refrigerant discharged from the compressor 2 rises.
(3) The specific enthalpy of the refrigerant at the inlet of the decompressor 5 drops from a higher level (point C2) than the specific enthalpy at the critical point of the first substance to a lower level (point C3) than the specific enthalpy at the critical point of the first substance. Due to an increase in the water flow rate through the heater 3 and an increase in a cooling amount of the refrigerant by the heater 3, the specific enthalpy of the refrigerant at the inlet of the decompressor 5 drops. By maintaining the high pressure-side pressure at a higher level than the critical pressure of the first substance while the state of the refrigerant at the inlet of the decompressor 5 changes from point B2 to point B3, the refrigerant on the high pressure-side is prevented from passing through the operation-prohibited region which is the critical point of the first substance and a vicinity thereof. As a result, decomposition of the first substance can be prevented. When the specific enthalpy of the refrigerant at the inlet of the decompressor 5 passes a value equivalent to the specific enthalpy at the critical point of the first substance, the refrigerant in a process of being expanded in the decompressor 5 passes through the operation-prohibited region. However, since the refrigerant passing through the operation-prohibited region at this point is limited to a very small volume of the refrigerant inside the decompressor 5, the effect of the refrigerant passing through the operation-prohibited region is minimal.

### (Third operation)

During the third operation, the controller 50 performs control as follows.
(1) The bypass valve 13 is fully closed. Accordingly, the refrigerant passes through the low pressure section 82 of the high/low pressure heat exchanger 8 without passing through the bypass passage 11.
(2) The water flow rate through the heater 3 is controlled so that the heating medium heating temperature equals the target temperature (for example, 65°C). When the heating medium heating temperature exceeds the target temperature, a correction is made so that the rotating speed of the water pump 22 increases. When the heating medium heating temperature is below the target temperature, a correction is made so that the rotating speed of the water pump 22 decreases.
(3) The opening of the decompressor 5 is set smaller than the opening of the decompressor 5 during the first operation.
(4) The compressor discharge temperature is set higher than the compressor discharge temperature during the first operation.
(5) The capacity of the compressor 2 is set higher than the capacity of the compressor 2 during the first operation. The capacity of the compressor 2 is adjusted so that the compressor discharge pressure reaches a level exceeding the critical pressure of the first substance.

Hereinafter, changes in pressure and specific enthalpy of the refrigerant during the third operation will be described. The refrigerant from the outlet of the refrigerant flow path 31 of the heater 3 is cooled by the high/low pressure heat exchanger 8 and changes from point B3 to point C3. By passing through the decompressor 5 and expanding, the state of the refrigerant changes from point C3 to point D3. The state of the refrigerant having passed through the decompressor 5 is a low-pressure, gas-liquid two-phase state. As the refrigerant is heated by outside air in the evaporator 6, the state of the refrigerant changes from point D3 to point E. The state (point E) of the refrigerant at the outlet of the evaporator 6 is a gas-liquid two-phase state, a saturated gas state, or a superheated steam state. The refrigerant having exited the evaporator 6 is further heated by the high/low pressure heat exchanger 8 and changes from the state of point E to the state of point F3. The state of point F3 is a state of superheated steam. The refrigerant in the state of superheated steam is sucked into the compressor 2 via the accumulator 7. Therefore, refrigerant liquid is not accumulated in the accumulator 7.

The controller 50 can estimate the state of the refrigerant to be sucked into the compressor 2 based on the compressor discharge temperature detected by the first refrigerant temperature sensor 14. The controller 50 may adjust the opening of the decompressor 5 so that the state of the refrigerant to be sucked into the compressor 2 which is estimated in this manner assumes a state of superheated steam.

### (Fourth operation)

When the refrigerant circuit of the heat pump unit 1 is stopped in a state where the third operation is being performed, the controller 50 performs the fourth operation. During the fourth operation, the controller 50 performs control as follows.
(1) The bypass valve 13 is fully opened. Accordingly, the refrigerant passes through the bypass passage 11 and bypasses the low pressure section 82 of the high/low pressure heat exchanger 8.
(2) By gradually reducing the rotating speed of the water pump 22, the water flow rate through the heater 3 is gradually reduced.
(3) The opening of the decompressor 5 is set larger than the opening of the decompressor 5 during the second operation and the third operation.
(4) The compressor discharge temperature is set lower than the compressor discharge temperature during the second operation and the third operation.
(5) The capacity of the compressor 2 is set lower than the capacity of the compressor 2 during the second operation and the third operation.

From the start to the end of the fourth operation, the specific enthalpy of the refrigerant at the inlet of the decompressor 5 rises. Due to a decrease in the water flow rate through the heater 3 and a decrease in a cooling amount of the refrigerant by the heater 3, the specific enthalpy of the refrigerant at the inlet of the decompressor 5 rises. At the end of the fourth operation, the specific enthalpy of the refrigerant at the inlet of the decompressor 5 is higher than the specific enthalpy at the critical point of the first substance. During the fourth operation, the high pressure-side pressure is maintained at a higher level than the critical pressure of the first substance. During the fourth operation, refrigerant liquid gradually accumulates in the accumulator 7. When the specific enthalpy of the refrigerant at the outlet of the refrigerant flow path 31 of the heater 3 reaches a higher level than the specific enthalpy at the critical point of the first substance, the controller 50 stops the compressor 2. At the end of the fourth operation, the amount of the refrigerant stored in the accumulator 7 is sufficiently large. By performing the fourth operation described above, when stopping the refrigerant circuit, the refrigerant can be prevented from passing through the operation-prohibited region which is the critical point of the first substance and a vicinity thereof and, consequently, decomposition of the first substance can be prevented.

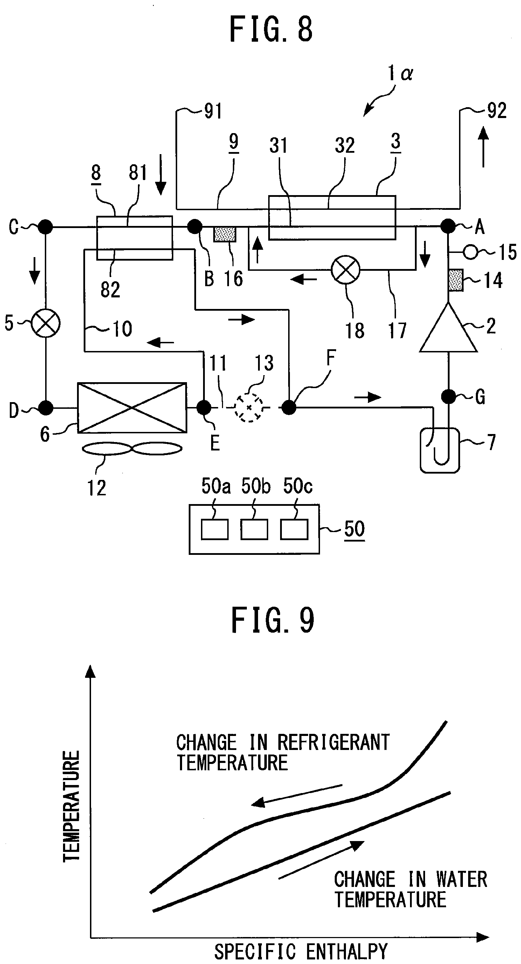

Fig. 8 is a configuration diagram showing a modification of the heat pump unit according to the first embodiment of the present invention. In the description of a heat pump unit 1α according to the modification shown in Fig. 8, portions that are the same as or equivalent to portions already described will be denoted by the same reference signs and description thereof will be omitted. As shown in Fig. 8, a refrigerant circuit of the heat pump unit 1α according to the modification further includes a heater bypass passage 17 which bypasses the refrigerant flow path 31 of the heater 3 and a heater bypass valve 18 which opens and closes the heater bypass passage 17. During the first operation and the fourth operation, the controller 50 opens the heater bypass valve 18. By adjusting the opening of the heater bypass valve 18, the controller 50 can adjust a flow rate of the refrigerant flowing through the refrigerant flow path 31 of the heater 3. During the first operation and the fourth operation, the controller 50 controls a flow rate of the refrigerant flowing through the refrigerant flow path 31 of the heater 3 so that the specific enthalpy of the refrigerant at the outlet of the refrigerant flow path 31 of the heater 3 is higher than the specific enthalpy at the critical point of the first substance. With the heat pump unit 1α according to the modification, an excessive rise of the heating medium heating temperature can be more reliably prevented during the first operation and the fourth operation.

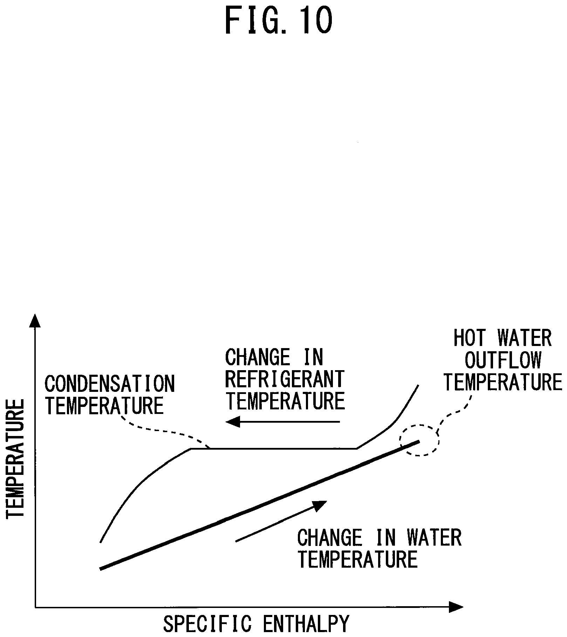

Fig. 9 is a graph showing changes in temperature and specific enthalpy of the refrigerant and water when compressor discharge pressure is supercritical. Fig. 10 is a graph showing changes in temperature and specific enthalpy of the refrigerant and water when compressor discharge pressure is critical pressure or lower. As shown in Fig. 9, when the compressor discharge pressure becomes supercritical, the refrigerant undergoes a continuous temperature change without having a condensation temperature. As shown in Fig. 10, while a hot water outflow temperature (heating medium heating temperature) which is a temperature of a water outlet of the heater 3 is slightly higher than the condensation temperature of the refrigerant, since there is a relationship in which the higher the hot water outflow temperature, the higher the condensation temperature, it may be assumed that hot water outflow temperature ≈ condensation temperature.

In the case of a refrigerant of which a hot water outflow temperature and a critical temperature are close to each other, the condensation temperature is in the vicinity of the critical temperature. In particular, HFO-1123 has a critical temperature of 59.2°C, and when the hot water outflow temperature is set to 65°C in order to prevent the proliferation of legionella bacteria, the condensation temperature is in the vicinity of the critical temperature. Therefore, the control according to the present invention is particularly effective when using HFO-1123 as the first substance of the refrigerant.

The critical pressure of HFO-1123 is 4.60 MPa (absolute pressure). CO₂ which is widely used as a refrigerant of a conventional heat pump water heater has a critical temperature of 31°C and critical pressure of 7.38 MPa (absolute pressure). Since the refrigerant in a supercritical state undergoes a continuous temperature change, the hot water outflow temperature (heating medium heating temperature) is readily increased. With the heat pump system according to the present first embodiment, the heating medium heating temperature is readily increased as the first substance assumes a supercritical state. When using HFO-1123 as the first substance of the refrigerant, since supercritical is reached at lower pressure as compared to a CO₂ refrigerant, design pressure of the refrigerant circuit can be set lower. Therefore, a heat pump system can be constructed with lower cost.

With the heat pump system according to the first embodiment, since decomposition of the first substance having a carbon-to-carbon double bond can be reliably prevented, the possibility that the first substance loses its ability to function as a refrigerant can be reduced. In addition, since the creation of sludge in the refrigerant circuit by decomposition products is prevented, the occurrence of clogging of the decompressor 5 and the like can be prevented.

With the heat pump system according to the first embodiment, by providing a liquid reservoir (the accumulator 7) on a low pressure side of the refrigerant circuit, refrigerant liquid in the liquid reservoir does not assume a supercritical state and decomposition of the refrigerant can be reliably prevented.

### [Reference Signs List]

- 1,1α: heat pump unit
- 2: compressor
- 3: heater
- 5: decompressor
- 6: evaporator
- 7: accumulator
- 8: high/low pressure heat exchanger
- 9: heating medium pipe
- 10: refrigerant piping
- 11: bypass passage
- 12: air blower
- 13: bypass valve
- 14: first refrigerant temperature sensor
- 15: refrigerant pressure sensor
- 16: second refrigerant temperature sensor
- 17: heater bypass passage
- 18: heater bypass valve
- 20: tank unit
- 21: hot water storage tank
- 22: water pump
- 23,24: water channel
- 25: water supply pipe
- 26: mixing valve
- 27: hot water outflow pipe
- 28: water supply branch pipe
- 29: hot water supply pipe
- 31: refrigerant flow path
- 32: heating medium flow path
- 50: controller
- 50a: CPU
- 50b: storage section
- 50c: input/output interface
- 81: high pressure section
- 82: low pressure section
- 91: inlet
- 92: outlet

## Claims

1. A heat pump system, comprising:
refrigerant including a substance having a carbon-to-carbon double bond, the substance being HFO-1123 or HFO-1234yf;
a compressor (2) configured to compress the refrigerant;
a pump (22) configured to pump a heating medium;
a heater (3) coupled to the compressor (2) to exchange heat between the heating medium pumped by the pump (22) and the refrigerant compressed by the compressor (2);
a decompressor (5) configured to decompress the refrigerant, the decompressor (5) having an inlet and an outlet;
an evaporator (6) coupled to the decompressor (5) to evaporate the refrigerant decompressed by the decompressor (5);
a high/low pressure heat exchanger (8) having a high pressure section (81) and a low pressure section (82), the high/low pressure heat exchanger (8) being configured to exchange heat between a high pressure refrigerant on a downstream side of the heater (3) and a low pressure refrigerant on a downstream side of the evaporator (6);
a bypass passage (11) bypassing the high pressure section (81) or the low pressure section (82);
a bypass valve (13) configured to open and close the bypass passage (11); and
a controller (50) coupled to the compressor (2), the decompressor (5), the bypass valve (13) and the pump (22), the controller (50) being configured to sequentially perform a first operation, a second operation and a third operation after the compressor (2) is activated,
a specific enthalpy of the refrigerant at the inlet of the decompressor (5) being kept at a higher level than a specific enthalpy at a critical point of the substance in the first operation,
a pressure of the refrigerant between the compressor (2) and the inlet of the decompressor (5) rising from a lower level than a critical pressure of the substance to a higher level than the critical pressure in the first operation,
the pressure of the refrigerant between the compressor (2) and the inlet of the decompressor (5) being kept at a level higher than the critical pressure in the second operation,
the specific enthalpy of the refrigerant at the inlet of the decompressor (5) dropping from a higher level than the specific enthalpy at the critical point to a lower level than the specific enthalpy at the critical point in the second operation,
a temperature of the heating medium flowing out from the heater (3) being kept at a level higher than a critical temperature of the substance in the third operation,
a compressor discharge temperature being a temperature of the refrigerant discharged from the compressor (2),
the controller (50) being configured to open the bypass valve (13) in the first operation,
the controller (50) being configured to stop the pump (22) or drive the pump (22) at a minimum rotating speed in the first operation,
the controller (50) being configured to set an opening of the decompressor (5) in the first operation to be larger than in the second operation and the third operation,
the controller (50) being configured to set the compressor discharge temperature in the first operation to be lower than in the second operation and the third operation,
the controller (50) being configured to set a capacity of the compressor (2) in the first operation to be lower than in the second operation and the third operation,
the controller (50) being configured to close the bypass valve (13) in the second operation,
the controller (50) being configured to gradually increase a rotating speed of the pump (22) in the second operation,
the controller (50) being configured to set the opening of the decompressor (5) in the second operation to be smaller than in the first operation,
the controller (50) being configured to set the compressor discharge temperature in the second operation to be higher than in the first operation,
the controller (50) being configured to set the capacity of the compressor (2) in the second operation to be higher than in the first operation.

2. The heat pump system according to claim 1, further comprising
an accumulator (7) connected between the evaporator (6) and the compressor (2) and configured to store the refrigerant in a liquid state,
wherein an amount of the refrigerant stored in the accumulator (7) in the first operation is larger than an amount of the refrigerant stored in the accumulator (7) in the third operation.

3. The heat pump system according to claim 1 or 2,
wherein a flow rate of the heating medium flowing through the heater (3) in the first operation is lower than a flow rate of the heating medium flowing through the heater (3) in the third operation, and
wherein a flow rate of the heating medium flowing through the heater (3) in the second operation rises in a continuous or stepwise manner.

4. The heat pump system according to any one of claims 1 to 3, further comprising
a flow rate regulating section (12) configured to regulate a flow rate of a fluid for heat exchange with the refrigerant in the evaporator (6),
wherein the flow rate of the fluid in the first operation is lower than the flow rate of the fluid in the third operation.

5. The heat pump system according to any one of claims 1 to 4, further comprising:
a pressure sensor (15) configured to detect the pressure of the refrigerant between the compressor (2) and the inlet of the decompressor (5); and
a temperature sensor (16) configured to detect a temperature of the refrigerant at an outlet of a refrigerant flow path (31) of the heater (3),
wherein the controller (50) being configured to:
calculate ,in the first operation, a specific enthalpy of the refrigerant at the outlet of the refrigerant flow path (31) of the heater (3), based on the pressure detected by the pressure sensor (15) and the temperature detected by the temperature sensor (16); and
control an operation of the pump (22) so that the calculated specific enthalpy is higher than the specific enthalpy at the critical point of the substance.

6. The heat pump system according to any one of claims 1 to 5, further comprising:
a heater bypass passage (17) bypassing a refrigerant flow path (31) of the heater (3); and
(17), a heater bypass valve (18) configured to open and close the heater bypass passage
wherein the heater bypass valve (18) is opened in the first operation.

7. The heat pump system according to any one of claims 1 to 6,
wherein the controller (50) being configured to perform a fourth operation when stopping the compressor (2) in the third operation,
wherein in the fourth operation, the pressure of the refrigerant between the compressor (2) and the inlet of the decompressor (5) is kept at a higher level than the critical pressure, and
wherein in the fourth operation, the specific enthalpy of the refrigerant at the inlet of the decompressor (5) rises from a lower level than the specific enthalpy at the critical point to a higher level than the specific enthalpy at the critical point.

## Patentansprüche

1. Wärmepumpensystem, das Folgendes umfasst:
Kältemittel, das eine Substanz mit einer Kohlenstoff-Kohlenstoff-Doppelbindung umfasst, wobei die Substanz HFO-1123 oder HFO-1234yf ist;
einen Kompressor (2), der ausgelegt ist, um das Kältemittel zu komprimieren;
eine Pumpe (22), die ausgelegt ist, um ein Wärmemedium zu pumpen;
ein Heizelement (3), das mit dem Kompressor (2) verbunden ist, um Wärme zwischen dem von der Pumpe (22) gepumpten Wärmemedium und dem von dem Kompressor (2) komprimierten Kältemittel zu tauschen;
einen Dekompressor (5), der ausgelegt ist, um das Kältemittel zu dekomprimieren, wobei der Dekompressor (5) einen Einlass und einen Auslass aufweist;
einen Verdampfer (6), der mit dem Dekompressor (5) verbunden ist, um das von dem Dekompressor (5) dekomprimierte Kältemittel zu verdampfen;
einen Hoch-/Niederdruck-Wärmetauscher (8), der einen Hochdruckabschnitt (81) und einen Niederdruckabschnitt (82) aufweist, wobei der Hoch-/Niederdruck-Wärmetauscher (8) ausgelegt ist, um Wärme zwischen einem Hochdruckkältemittel auf einer dem Heizelement (3) nachgelagerten Seite und einem Niederdruckkältemittel auf einer dem Verdampfer (6) nachgelagerten Seite zu tauschen;
einen Umgehungskanal (11), der den Hochdruckabschnitt (81) oder den Niederdruckabschnitt (82) umgeht;
ein Umgehungsventil (13), das ausgelegt ist, um den Umgehungskanal (11) zu öffnen und zu schließen; und
eine Steuerung (50), die mit dem Kompressor (2), dem Dekompressor (5), dem Umgehungsventil (13) und der Pumpe (22) verbunden ist, wobei die Steuerung (50) ausgelegt ist, um nacheinander einen ersten Vorgang, einen zweiten Vorgang und einen dritten Vorgang durchzuführen, nachdem der Kompressor (2) aktiviert wird,
wobei eine spezifische Enthalpie des Kältemittels am Einlass des Dekompressors (5) bei einem höheren Wert gehalten wird als eine spezifische Enthalpie an einem kritischen Punkt der Substanz in dem ersten Vorgang,
ein Druck des Kältemittels zwischen dem Kompressor (2) und dem Einlass des Dekompressors (5) von einem niedrigeren Wert als ein entscheidender Druck der Substanz auf einen höheren Wert als der kritische Druck in dem ersten Vorgang steigt,
der Druck des Kältemittels zwischen dem Kompressor (2) und dem Einlass des Dekompressors (5) bei einem höheren Wert gehalten wird als der kritische Druck in dem zweiten Vorgang,
die spezifische Enthalpie des Kältemittels an dem Einlass des Dekompressors (5) von einem höheren Wert als die spezifische Enthalpie an dem kritischen Punkt auf einen niedrigeren Wert als die spezifische Enthalpie an dem kritischen Punkt in dem zweiten Vorgang abfällt,
eine Temperatur des Wärmemediums, das aus dem Heizelement (3) ausströmt, bei einem höheren Wert gehalten wird als eine kritische Temperatur der Substanz in dem dritten Vorgang,
eine Kompressorablasstemperatur eine Temperatur des aus dem Kompressor (2) abgelassenen Kältemittels darstellt,
die Steuerung (50) ausgelegt ist, um das Umgehungsventil (13) in dem ersten Vorgang zu öffnen,
die Steuerung (50) ausgelegt ist, um die Pumpe (22) zu stoppen oder um die Pumpe (22) mit einer Mindestdrehgeschwindigkeit in dem ersten Vorgang anzutreiben,
die Steuerung (50) ausgelegt ist, um einzustellen, dass eine Öffnung des Dekompressors (5) in dem ersten Vorgang größer als in dem zweiten Vorgang und dem dritten Vorgang ist,
die Steuerung (50) ausgelegt ist, um einzustellen, dass die Kompressorablasstemperatur in dem ersten Vorgang niedriger als in dem zweiten Vorgang und dem dritten Vorgang ist,
die Steuerung (50) ausgelegt ist, um einzustellen, dass eine Kapazität des Kompressors (2) in dem ersten Vorgang geringer als in dem zweiten Vorgang und dem dritten Vorgang ist,
die Steuerung (50) ausgelegt ist, um das Umgehungsventil (13) in dem zweiten Vorgang zu schließen,
die Steuerung (50) ausgelegt ist, um eine Drehgeschwindigkeit der Pumpe (22) in dem zweiten Vorgang allmählich zu erhöhen,
die Steuerung (50) ausgelegt ist, um einzustellen, dass die Öffnung des Dekompressors (5) in dem zweiten Vorgang kleiner als in dem ersten Vorgang ist,
die Steuerung (50) ausgelegt ist, um einzustellen, dass die Kompressorablasstemperatur in dem zweiten Vorgang höher als in dem ersten Vorgang ist,
die Steuerung (50) ausgelegt ist, um einzustellen, dass die Kapazität des Kompressors (2) in dem zweiten Vorgang höher als in dem ersten Vorgang ist.

2. Wärmepumpensystem nach Anspruch 1, das außerdem einen Akkumulator (7) umfasst, der zwischen dem Verdampfer (6) und dem Kompressor (2) verbunden und ausgelegt ist, um das Kältemittel in einem flüssigen Zustand zu speichern,
wobei eine Menge des Kältemittels, die in dem ersten Vorgang in dem Akkumulator (7) gespeichert wird, größer als eine Menge des Kältemittels ist, die in dem dritten Vorgang in dem Akkumulator (7) gespeichert wird.

3. Wärmepumpensystem nach Anspruch 1 oder 2,
wobei eine Durchflussrate des Wärmemediums, das in dem ersten Vorgang durch das Heizelement (3) fließt, niedriger als eine Durchflussrate des Wärmemediums ist, das in dem dritten Vorgang durch das Heizelement (3) fließt, und
wobei eine Durchflussrate des Wärmemediums, das in dem zweiten Vorgang durch das Heizelement (3) fließt, kontinuierlich oder schrittweise steigt.

4. Wärmepumpensystem nach einem der Ansprüche 1 bis 3, das außerdem einen Durchflussratenregulierungsabschnitt (12) umfasst, der ausgelegt ist, um eine Durchflussrate eines Fluids zur Wärmetauschung mit dem Kältemittel in dem Verdampfer (6) zu regulieren,
wobei die Durchflussrate des Fluids in dem ersten Vorgang niedriger als die Durchflussrate des Fluids in dem dritten Vorgang ist.

5. Wärmepumpensystem nach einem der Ansprüche 1 bis 4, das außerdem Folgendes umfasst:
einen Drucksensor (15), der ausgelegt ist, um den Druck des Kältemittels zwischen dem Kompressor (2) und dem Einlass des Dekompressors (5) zu detektieren; und
einen Temperatursensor (16), der ausgelegt ist, um eine Temperatur des Kältemittels an einem Auslass eines Kältemittelflusspfads (31) des Heizelements (3) zu detektieren,
wobei die Steuerung (50) für Folgendes ausgelegt ist:
Berechnen einer spezifischen Enthalpie des Kältemittels an dem Auslass des Kältemittelflusspfads (31) des Heizelements (3) in dem ersten Vorgang auf Basis des vom Drucksensor (15) detektierten Drucks und der vom Temperatursensor (16) detektierten Temperatur; und
Steuern eines Vorgangs der Pumpe (22), so dass die berechnete spezifische Enthalpie höher als die spezifische Enthalpie an dem kritischen Punkt der Substanz ist.

6. Wärmepumpensystem nach einem der Ansprüche 1 bis 5, das außerdem Folgendes umfasst:
einen Heizelementumgehungskanal (17), der einen Kältemittelflusspfad (31) des Heizelements (3) umgeht; und
ein Heizelementumgehungsventil (18), das ausgelegt ist, um den Heizelementumgehungskanal (17) zu öffnen und zu schließen,
wobei das Heizelementumgehungsventil (18) in dem ersten Vorgang geöffnet ist.

7. Wärmepumpensystem nach einem der Ansprüche 1 bis 6,
wobei die Steuerung (50) ausgelegt ist, um einen vierten Vorgang durchzuführen, wenn der Kompressor (2) in dem dritten Vorgang gestoppt wird,
wobei der Druck des Kältemittels zwischen dem Kompressor (2) und dem Einlass des Dekompressors (5) in dem vierten Vorgang bei einem höheren Wert als der kritische Druck gehalten wird und
wobei die spezifische Enthalpie des Kältemittels am Einlass des Dekompressors (5) in dem vierten Vorgang von einem niedrigeren Wert als die spezifische Enthalpie an dem kritischen Punkt zu einem höheren Wert als die spezifische Enthalpie an dem kritischen Punkt steigt.

## Revendications

1. Système de pompe à chaleur, comprenant :
un fluide frigorigène incluant une substance présentant une double liaison carbone-carbone, la substance étant le combustible HFO-1123 ou HFO-1234yf ;
un compresseur (2) configuré de manière à comprimer le fluide frigorigène ;
une pompe (22) configurée de manière à pomper un fluide caloporteur ;
un réchauffeur (3) couplé au compresseur (2) pour échanger de la chaleur entre le fluide caloporteur pompé par la pompe (22) et le fluide frigorigène comprimé par le compresseur (2) ;
un décompresseur (5) configuré de manière à décompresser le fluide frigorigène, le décompresseur (5) présentant une entrée et une sortie ;
un évaporateur (6) couplé au décompresseur (5) pour évaporer le fluide frigorigène décompressé par le décompresseur (5) ;
un échangeur de chaleur haute/basse pression (8) présentant une section haute pression (81) et une section basse pression (82), l'échangeur de chaleur haute/basse pression (8) étant configuré de manière à échanger de la chaleur entre un fluide frigorigène haute pression en aval du réchauffeur (3) et un fluide frigorigène basse pression en aval de l'évaporateur (6) ;
un passage de dérivation (11) contournant la section haute pression (81) ou la section basse pression (82) ;
une vanne de dérivation (13) configurée de manière à ouvrir et à fermer le passage de dérivation (11) ; et
un régulateur (50) couplé au compresseur (2), au décompresseur (5), à la vanne de dérivation (13) et à la pompe (22), le régulateur (50) étant configuré de manière à mettre en œuvre séquentiellement une première opération, une deuxième opération et une troisième opération après l'activation du compresseur (2) ;
une enthalpie spécifique du fluide frigorigène à l'entrée du décompresseur (5) étant maintenue à un niveau plus élevé qu'une enthalpie spécifique à un point critique de la substance lors de la première opération ;
une pression du fluide frigorigène entre le compresseur (2) et l'entrée du décompresseur (5) s'élevant d'un niveau inférieur à une pression critique de la substance à un niveau supérieur à la pression critique lors de la première opération ;
la pression du fluide frigorigène entre le compresseur (2) et l'entrée du décompresseur (5) étant maintenue à un niveau supérieur à la pression critique lors de la deuxième opération ;
l'enthalpie spécifique du fluide frigorigène à l'entrée du décompresseur (5) chutant d'un niveau supérieur à l'enthalpie spécifique au point critique à un niveau inférieur à l'enthalpie spécifique au point critique lors de la deuxième opération ;
une température du fluide caloporteur s'écoulant en sortie du réchauffeur (3) étant maintenue à un niveau supérieur à une température critique de la substance lors de la troisième opération ;
une température de refoulement de compresseur correspondant à une température du fluide frigorigène refoulé par le compresseur (2) ;
le régulateur (50) étant configuré de manière à ouvrir la vanne de dérivation (13) lors de la première opération ;
le régulateur (50) étant configuré de manière à arrêter la pompe (22), ou à entraîner la pompe (22) à une vitesse de rotation minimale lors de la première opération ;
le régulateur (50) étant configuré de manière à régler une ouverture du décompresseur (5) lors de la première opération, afin qu'elle soit plus grande que l'ouverture lors de la deuxième opération et de la troisième opération ;
le régulateur (50) étant configuré de manière à régler la température de refoulement de compresseur lors de la première opération afin qu'elle soit inférieure à la température lors de la deuxième opération et de la troisième opération ;
le régulateur (50) étant configuré de manière à régler une capacité du compresseur (2) lors de la première opération, afin qu'elle soit inférieure à une capacité lors de la deuxième opération et de la troisième opération ;
le régulateur (50) étant configuré de manière à fermer la vanne de dérivation (13) lors de la deuxième opération ;
le régulateur (50) étant configuré de manière à augmenter progressivement une vitesse de rotation de la pompe (22) lors de la deuxième opération ;
le régulateur (50) étant configuré de manière à régler l'ouverture du décompresseur (5) lors de la deuxième opération afin qu'elle soit plus petite que lors de la première opération ;
le régulateur (50) étant configuré de manière à régler la température de refoulement de compresseur lors de la deuxième opération afin qu'elle soit plus élevée que lors de la première opération ;
le régulateur (50) étant configuré de manière à régler la capacité du compresseur (2) lors de la deuxième opération, afin qu'elle soit supérieure à une capacité lors la première opération.

2. Système de pompe à chaleur selon la revendication 1, comprenant en outre :
un réservoir tampon (7) connecté entre l'évaporateur (6) et le compresseur (2) et configuré de manière à stocker le fluide frigorigène à l'état liquide ;
dans lequel une quantité du fluide frigorigène stockée dans le réservoir tampon (7) lors de la première opération est supérieure à une quantité du fluide frigorigène stockée dans le réservoir tampon (7) lors de la troisième opération.

3. Système de pompe à chaleur selon la revendication 1 ou 2,
dans lequel un débit du fluide caloporteur s'écoulant à travers le réchauffeur (3) lors de la première opération est inférieur à un débit du fluide caloporteur s'écoulant à travers le réchauffeur (3) lors de la troisième opération ; et
dans lequel un débit du fluide caloporteur s'écoulant à travers le réchauffeur (3) lors de la deuxième opération augmente de manière continue ou progressive.

4. Système de pompe à chaleur selon l'une quelconque des revendications 1 à 3, comprenant en outre :
une section de régulation de débit (12) configurée de manière à réguler un débit d'un fluide pour un échange de chaleur avec le fluide frigorigène dans l'évaporateur (6) ;
dans lequel le débit du fluide lors de la première opération est inférieur au débit du fluide lors de la troisième opération.

5. Système de pompe à chaleur selon l'une quelconque des revendications 1 à 4, comprenant en outre :
un capteur de pression (15) configuré de manière à détecter la pression du fluide frigorigène entre le compresseur (2) et l'entrée du décompresseur (5) ; et
un capteur de température (16) configuré de manière à détecter une température du fluide frigorigène à une sortie d'un trajet d'écoulement de fluide frigorigène (31) du réchauffeur (3) ;
dans lequel le régulateur (50) est configuré de manière à :
calculer, lors de la première opération, une enthalpie spécifique du fluide frigorigène à la sortie du trajet d'écoulement de fluide frigorigène (31) du réchauffeur (3), sur la base de la pression détectée par le capteur de pression (15) et de la température détectée par le capteur de température (16) ; et
réguler un fonctionnement de la pompe (22) de sorte que l'enthalpie spécifique calculée est supérieure à l'enthalpie spécifique au point critique de la substance.

6. Système de pompe à chaleur selon l'une quelconque des revendications 1 à 5, comprenant en outre :
un passage de dérivation de réchauffeur (17) contournant un trajet d'écoulement de fluide frigorigène (31) du réchauffeur (3) ; et
une vanne de dérivation de réchauffeur (18) configurée de manière à ouvrir et à fermer le passage de dérivation de réchauffeur (17) ;
dans lequel la vanne de dérivation de réchauffeur (18) est ouverte lors de la première opération.

7. Système de pompe à chaleur selon l'une quelconque des revendications 1 à 6,
dans lequel le régulateur (50) est configuré de manière à mettre en œuvre une quatrième opération lors de l'arrêt du compresseur (2) lors de la troisième opération ;
dans lequel, lors de la quatrième opération, la pression du fluide frigorigène entre le compresseur (2) et l'entrée du décompresseur (5) est maintenue à un niveau supérieur à la pression critique ; et
dans lequel, lors de la quatrième opération, l'enthalpie spécifique du fluide frigorigène à l'entrée du décompresseur (5) s'élève, d'un niveau inférieur à l'enthalpie spécifique au point critique à un niveau supérieur à l'enthalpie spécifique au point critique.
